(19) Europäisches Patentamt
European Patent Office
Office européen des brevets

(11) **EP 3 450 024 B1**

(12) **EUROPÄISCHE PATENTSCHRIFT**

(45) Veröffentlichungstag und Bekanntmachung des Hinweises auf die Patenterteilung:
**01.02.2023   Patentblatt 2023/05**

(21) Anmeldenummer: **17020394.7**

(22) Anmeldetag: **30.08.2017**

(51) Internationale Patentklassifikation (IPC):
**B05B 7/26** (2006.01)   **B05C 11/10** (2006.01)
**B29C 44/34** (2006.01)   **B29C 44/46** (2006.01)
B05B 7/00 (2006.01)   B05C 5/02 (2006.01)
B29B 7/74 (2006.01)   B29C 44/36 (2006.01)

(52) Gemeinsame Patentklassifikation (CPC):
**B05B 7/267; B05C 11/1015; B29C 44/3442;
B29C 44/3446;** B05B 7/0031; B05C 5/02;
B29B 7/7414; B29B 7/7419; B29B 7/7423;
B29C 44/36

(54) **DOSIER- UND APPLIKATIONSANLAGE FÜR EIN FEUCHTIGKEITSHÄRTENDES POLYMERMATERIAL**

DOSING AND APPLICATION SYSTEM FOR A MOISTURE-CURABLE POLYMERIC MATERIAL

INSTALLATION DE DOSAGE ET D'APPLICATION POUR UN MATÉRIAU POLYMÈRE DURCI SOUS L'EFFET DE L'HUMIDITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.03.2019   Patentblatt 2019/10**

(73) Patentinhaber: WAGNER INTERNATIONAL AG
**9450 Altstätten (CH)**

(72) Erfinder: **Gerke, Thomas**
**35708 Haiger (DE)**

(74) Vertreter: **Nückel, Thomas**
**Patentanwaltskanzlei Nückel**
**Oberdorfstrasse 16**
**8820 Wädenswil (CH)**

(56) Entgegenhaltungen:
EP-A1- 1 240 931        EP-A2- 0 091 699
EP-A2- 2 017 013        EP-B1- 2 017 013
WO-A1-2016/125900        WO-A1-2017/004635
GB-A- 2 215 643          US-A- 4 778 631
US-A- 5 207 352          US-A- 5 382 397
US-A1- 2007 051 832

**Beschreibung**

**Technisches Gebiet**

Die Erfindung betrifft eine Dosier- und Applikationsanlage für ein feuchtigkeitshärtendes Polymermaterial.

Die erfindungsgemässe Dosier- und Applikationsanlage kann zum Dosieren und Applizieren von zum Beispiel 1K-Schaum verwendet werden. 1K-Schaum (Einkomponenten-Schaum) ist ein überwiegend geschlossenporiges Polymermaterial, das unter anderem als Dichtungsmaterial dient. 1K-Schaum wird zum Beispiel benutzt, um Fahrzeugscheinwerfer abzudichten. Dazu wird eine Raupe aus 1K-Schaum auf die Fahrzeugkarosserie appliziert und anschliessend der Scheinwerfer auf die Raupe gedrückt. 1K-Schaum ist thixotrop, er ist also - anders als 2K-Schaum - unmittelbar nachdem er aus der Düse ausgetreten ist, geschäumt. Daher kann 1K-Schaum auch kopfüber (3D) aufgetragen werden, ohne dass er heruntertropft.

2K-Schaum (Zweikomponenten-Schaum) wird aus zwei Komponenten gebildet und ist, nachdem er aus der Applikationsdüse ausgetreten ist, flüssiger als 1K-Schaum. 2K-Schaum reagiert erst nach dem Austritt aus der Düse mit Gas (Luft oder Stickstoff), das als Kristallisationskeim dient. Wird 2K-Schaum auf eine schräge Fläche appliziert, fliesst er von dort ab, bevor er durch Aushärtung ausreichend stabilisiert ist.

In der Automobilindustrie werden, wenn möglich, 1K-Schäume gegenüber 2K-Schäumen bevorzugt, da beim Mischen der Komponenten, die zur Herstellung des 2K-Schaums erforderlich sind, Fehler passieren können.

Grundsätzlich sollte keine Luftfeuchtigkeit in die Anlage gelangen, weil sonst das zu applizierende Material bereits in der Anlage mit der Luft beziehungsweise den Wassermolekülen in der Luft reagieren und aushärten könnte.

**Stand der Technik**

Aus dem Stand der Technik EP 2 017 013 B1 ist eine Schlitzbeschichtungspistole zum Extrudieren eines verschäumbaren geschmolzenen Materials in breitflächigem Auftrag bekannt. Zur Erzeugung des verschäumbaren geschmolzenen Materials sind eine Materialquelle, eine erste Zahnradpumpe, eine zweite Zahnradpumpe und eine Gaszufuhr vorgesehen. Die erste Pumpe fördert das geschmolzene Material von der Materialquelle über eine Verbindungsleitung (im Folgenden auch als Pumpen-Verbindungsleitung bezeichnet) zur zweiten Pumpe, wobei die zweite Pumpe mehr Material fördert als die erste Pumpe. Dadurch entsteht in der Pumpen-Verbindungsleitung ein Unterdruck, der genutzt wird, um Gas in das geschmolzene Material einzubringen. Anschliessend wird das mit dem Gas angereicherte geschmolzene Material in einem Mischer gemischt und der Schlitzbeschichtungspistole zugeführt. Bei dieser Lösung muss die Verbindungsleitung zwischen den beiden Pumpen sehr kurz sein. Die erste Pumpe kann also nicht in unmittelbarer Nähe zur Materialquelle angeordnet sein. Andernfalls würde wegen der langen Pumpen-Verbindungsleitung und der hohen Viskosität des geschmolzenen Materials in der Verbindungsleitung ein Druckabfall entstehen, der dazu führt, dass weniger oder sogar gar kein Gas mehr in die Verbindungsleitung gesaugt wird. Zudem ist es bei dieser Lösung schwierig das Mischungsverhältnis von Gas zu geschmolzenem Material dauerhaft konstant zu halten. Ein schwankendes Mischungsverhältnis führt zu Qualitätseinbussen.

Bei der Lösung gemäss dem Stand der Technik ist die erste Pumpe zwingend als Zahnradpumpe auszubilden, damit das hochviskose geschmolzene Material nicht nur über eine kurze Leitung, sondern auch über eine mehrere Meter lange Leitung aus der Materialquelle herausgefördert werden kann. Ein weiterer Nachteil ist, dass auch die zweite Pumpe als Zahnradpumpe auszubilden ist, um in der Pumpen-Verbindungsleitung den erforderlichen Unterdruck erzeugen zu können, und um den durch das hochviskose Material verursachten Druckverlust in der Verbindungsleitung ausgleichen zu können. Zudem sind die beiden Zahnradpumpen schwer und teuer. Da das Material in der Pumpen-Verbindungsleitung mit Gas angereichert ist, muss die gesamte Verbindungsleitung gereinigt werden bevor die Anlage heruntergefahren wird. Andernfalls kann das Material mit dem Gas in der Verbindungsleitung reagieren und die Verbindungsleitung verstopfen.

Des Weiteren ist aus dem Stand der Technik US 2007/051832 A1 eine Vorrichtung zum Erzeugen eines geschäumten Materials bekannt. Die Vorrichtung umfasst einen Materialbehälter, aus dem das Material mit Hilfe einer Materialtransportpumpe über eine Verbindungsleitung zu einer Schaumtransportpumpe transportiert wird. Mit Hilfe eines in der Verbindungsleitung angeordneten T-Stücks wird Druckluft in die Verbindungsleitung und damit in das Material eingespeist. Das Material und die eingespeiste Luft werden in einem Mischer, der der Schaumtransportpumpe nachgeschaltet ist, gemischt und das so erzeugte Schaummaterial einer Reihe von Düsen zum Applizieren des Schaummaterials zugeführt.

Aus dem Stand der Technik WO 2017/004635 A1 ist eine Vorrichtung mit intermittierend bereitgestellter flüssiger Kunststoffkomponente bekannt.

**Darstellung der Erfindung**

Eine Aufgabe der Erfindung ist es, eine Dosier- und Applikationsanlage für ein feuchtigkeitshärtendes Polymermaterial anzugeben, bei der Gas möglichst gleichmässig in das Polymermaterial eingebracht werden kann.

Vorteilhafterweise ist die erfindungsgemässe Dosier- und Applikationsanlage leichter als diejenige aus dem Stand der Technik.

Die Aufgabe wird durch eine Dosier- und Applikationsanlage für ein feuchtigkeitshärtendes Polymermaterial mit den in Patentanspruch 1 angegebenen Merkmalen gelöst.

Die erfindungsgemässe Dosier- und Applikationsanlage für ein feuchtigkeitshärtendes Polymermaterial umfasst einen Vorratsbehälter für das Polymermaterial und eine erste Pumpe sowie eine zweite Pumpe, wobei das Polymermaterial mit der ersten Pumpe vom Vorratsbehälter zur zweiten Pumpe förderbar ist. Zudem ist eine Gasdosiervorrichtung mit einem definierten Druckübersetzungsverhältnis vorgesehen, um ein Gas auf einen definierten Druck zu bringen, wobei die Gasdosiervorrichtung ausgangsseitig mit dem Eingang der zweiten Pumpe verbunden ist. Die Gasdosiervorrichtung weist eine erste Kammer mit einem definierten Volumen und einen Druckkolben auf, wobei der Druckkolben in der ersten Kammer einen definierten Hub ausführt. Zudem weist die Gasdosiervorrichtung eine zweite Kammer und einen mit dem Druckkolben gekoppelten Kolben auf, mit dem das in der zweiten Kammer befindliche Gas unter den definierten Druck setzbar ist. Darüber hinaus weist die Anlage einen Mischer zum Mischen des Polymermaterials und des Gases sowie ein dem Mischer nachgeordnetes Ventil zum Dosieren und eine Düse zum Applizieren des Polymermaterial-Gas-Gemisches auf. Zudem ist am Gaseinlass der zweiten Kammer ein erstes Rückschlagventil und am Gasauslass der Gasdosiervorrichtung ein zweites Rückschlagventil angeordnet.

Vorteilhafte Weiterbildungen der Erfindung ergeben sich aus den in den abhängigen Patentansprüchen angegebenen Merkmalen.

Bei einer Ausführungsform der erfindungsgemässen Dosier- und Applikationsanlage ist der Mischer als statischer Mischer oder als dynamischer Mischer oder als Kombination aus statischem und dynamischem Mischer ausgebildet.

Bei einer anderen Ausführungsform der erfindungsgemässen Dosier- und Applikationsanlage weist die Gasdosiervorrichtung einen Wegaufnehmer zur Erfassung des Hubs des Druckkolbens auf. Führt der Druckkolben wiederholt gleichbleibend grosse Hübe aus, ist sichergestellt, dass aus der zweiten Kammer wiederholt gleichbleibend grosse Gasvolumina ausgestossen werden. Der Wegaufnehmer kann auch zur Überwachung der beiden Endlagen des Druckkolbens herangezogen werden. Wenn der Druckkolben die eine und die andere Endlage erreicht, ist sichergestellt, dass das gesamte Gas ausgestossen wird. Bei Bedarf kann mit dem Wegaufnehmer auch der Zustand der Druckkolben-Dichtung überprüft werden. Hierzu kann zum Beispiel der zeitliche Verlauf des Druckkolbenhubs (Weg-Zeit-Diagramm des Druckkolbens) ausgewertet werden. Wenn durch die Steuerung festgestellt wird, dass der zeitliche Verlauf des Kolbenhubs nicht dem Sollverlauf entspricht, kann die Steuerung einen Warnhinweis ausgeben.

Bei der erfindungsgemässen Dosier- und Applikationsanlage kann vorgesehen sein, dass die Gasdosiervorrichtung ein drittes Rückschlagventil aufweist, das im Strömungspfad des Gases zwischen dem ersten Rückschlagventil und dem zweiten Rückschlagventil angeordnet ist.

Zudem kann bei der erfindungsgemässen Dosier- und Applikationsanlage vorgesehen sein, dass vor der zweiten Pumpe ein erster Drucksensor angeordnet ist, um den Druck in der Zuleitung zur zweiten Pumpe zu erfassen.

Vorteilhafter Weise ist bei der erfindungsgemässen Dosier- und Applikationsanlage am Auslass der zweiten Pumpe ein zweiter Drucksensor vorgesehen, um den Druck am Auslass der zweiten Pumpe zu erfassen. Mit dem zweiten Drucksensor kann der Betriebszustand der zweiten Pumpe überwacht werden. Wenn die Steuerung einen Störfall erkannt hat, kann sie zum Beispiel die Anlage abschalten und so die Pumpe vor einer Überlastung schützen.

Bei einer Weiterbildung der erfindungsgemässen Dosier- und Applikationsanlage weist die Gasdosiervorrichtung einen Drucksensor auf, um den Druck in der zweiten Kammer zu erfassen.

Bei einer anderen Weiterbildung der erfindungsgemässen Dosier- und Applikationsanlage ist am Einlass des Mischers ein Drucksensor vorgesehen, um den Druck am Einlass des Mischers zu erfassen.

Bei einer zusätzlichen Weiterbildung der erfindungsgemässen Dosier- und Applikationsanlage ist am Auslass des Mischers eine dritte Pumpe vorgesehen, um die Polymermaterial-Ausstossmenge vorzugeben.

Nach einem weiteren Merkmal der Erfindung ist bei der Dosier- und Applikationsanlage am Auslass der dritten Pumpe ein Drucksensor vorgesehen, um den Druck an ihrem Auslass zu erfassen. Mit dem zweiten Drucksensor kann der Betriebszustand der dritten Pumpe überwacht werden.

Darüber hinaus kann bei der erfindungsgemässen Dosier- und Applikationsanlage vorgesehen sein, dass die erste Pumpe derart ausgebildet und betreibbar ist, dass sie den Druck an ihrem Auslass konstant hält, und die zweite Pumpe derart ausgebildet und betreibbar ist, dass sie den Druck an ihrem Auslass konstant hält.

Zudem können bei der erfindungsgemässen Dosier- und Applikationsanlage eine Beschleunigermaterial-Pumpe für Beschleunigermaterial und eine zusätzliche Pumpe (Dosierpumpe) vorgesehen sein, wobei die Beschleunigermaterial-Pumpe dazu dient Beschleunigermaterial zur zusätzlichen Pumpe zu fördern. Die zusätzliche Pumpe ist vorgesehen, um das Beschleunigermaterial zu einem zweiten Mischer zu pumpen, wobei der zweite Mischer dazu vorgesehen ist, das Gas-Polymermaterial-Gemisch mit dem Beschleunigermaterial zu mischen. Die zusätzliche Pumpe kann eine Dosierpumpe sein.

Bei einer Ausführungsform der erfindungsgemässen Dosier- und Applikationsanlage ist auf der Einlassseite der zusätzlichen Pumpe ein Drucksensor vorgesehen.

Bei einer weiteren Ausführungsform der erfindungsgemässen Dosier- und Applikationsanlage ist am Auslass der zusätzlichen Pumpe ein Drucksensor vorgesehen, um den Druck an ihrem Auslass zu erfassen. Mit dem Drucksensor kann der Betriebszustand der zusätzlichen Pumpe überwacht werden.

Schliesslich kann die erfindungsgemässe Dosier- und Applikationsanlage einen Roboter aufweisen, der die Düse zum Applizieren des Polymermaterial-Gas-Gemisches trägt.

## Kurze Beschreibung der Zeichnungen

Im Folgenden wird die Erfindung mit mehreren Ausführungsbeispielen anhand von neun Figuren weiter erläutert.

Figur 1    zeigt ein Blockschaltbild einer ersten möglichen Ausführungsform der erfindungsgemässen Dosier- und Applikationsanlage.

Figur 2    zeigt ein Blockschaltbild einer zweiten möglichen Ausführungsform der erfindungsgemässen Dosier- und Applikationsanlage.

Figur 3    zeigt eine Gasdosiervorrichtung, die bei der erfindungsgemässen Dosier- und Applikationsanlage zum Einsatz kommen kann.

Figur 4    zeigt die Gasdosiervorrichtung in der Ansicht von vorne.

Figur 5    zeigt die Gasdosiervorrichtung im Längsschnitt.

Figur 6    zeigt in einer Prinzipdarstellung eine erste mögliche Ausführungsform der mit einem Roboter betriebenen Dosier- und Applikationsanlage.

Figur 7    zeigt in einer Prinzipdarstellung eine zweite mögliche Ausführungsform der mit einem Roboter betriebenen Dosier- und Applikationsanlage.

Figur 8    zeigt die erste Ausführungsform der mit einem Roboter betriebenen Dosier- und Applikationsanlage in der Seitenansicht.

Figur 9    zeigt die erste Ausführungsform der mit einem Roboter betriebenen Dosier- und Applikationsanlage in einer dreidimensionalen Ansicht.

## Wege zur Ausführung der Erfindung

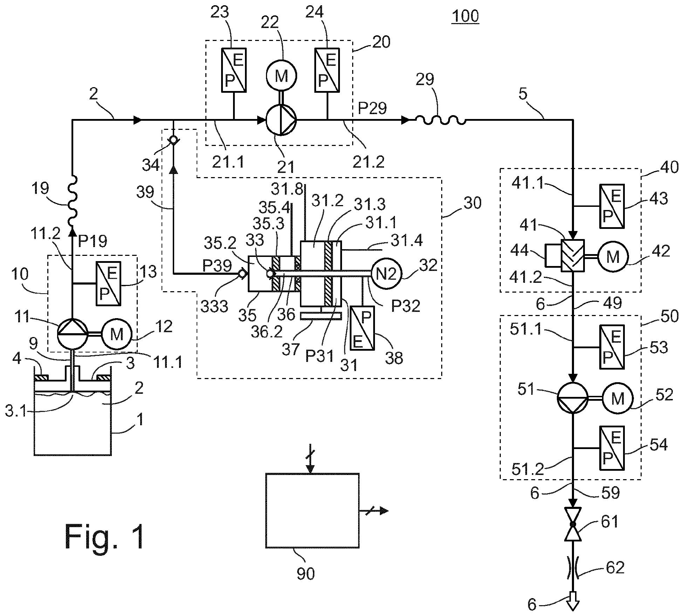

Im Folgenden wird der Aufbau einer ersten möglichen Ausführungsform der Dosier- und Applikationsanlage 100 für ein feuchtigkeitshärtendes Polymermaterial 2 weiter erläutert. Die Dosier- und Applikationsanlage 100 ist in Figur 1 in Form eines Blockschaltbilds dargestellt.

Feuchtigkeit wird im Folgenden verstanden als ein in einem Gas gelöstes Fluid, wobei das Fluid zum Beispiel Wasser und das Gas Luft oder Stickstoff sein kann.

Das feuchtigkeitshärtende Polymermaterial 2, das mit der Dosier- und Applikationsanlage 100 dosiert und appliziert werden kann, ist ein Einkomponenten-Material. Es hat eine mittlere bis hohe Viskosität und dient zum Beispiel als Dichtmittel oder Klebstoff. Das feuchtigkeitshärtende Polymermaterial 2, das im Folgenden auch kurzum als Polymermaterial bezeichnet wird, wird vom Hersteller in der Regel in einem Vorratsbehälter 1 oder kurz Behälter, zum Beispiel einem Eimer oder einem Fass, zur Verfügung gestellt.

In den Behälter 1 mit dem zu fördernden Polymermaterial 2 kann von oben eine Folgeplatte 3 eingeführt und mittels einer ersten Pumpe 11 das Polymermaterial 2 dann durch die Folgeplatte 3 hindurch gefördert werden.

Die Folgeplatte 3 ist vorzugsweise mit einer ringförmigen Dichtung bestückt, damit die Folgeplatte 3 an der Wand des Behälters 1 dichtend anliegen kann. Die Dichtung sorgt dafür, dass zwischen der Folgeplatte 3 und der Behälterwand kein Material austritt. Die Folgeplatte 3 weist eine druckwirksame Fläche auf, die vorteilhafter Weise zumindest partiell schräg ausgebildet ist. Dadurch kann partiell der Druck auf das zu fördernde Material 2 erhöht und dafür gesorgt werden, dass das Polymermaterial verstärkt zur Förderöffnung 3.1 der Folgeplatte 3 strömt. Durch die Förderöffnung 3.1 kann die Pumpe 11 das Polymermaterial 2 aus dem Behälter 1 herausfördern.

Die Pumpe 11 wird über einen Antrieb 12 und eine Antriebsstange angetrieben. Wenn die Pumpe 11 als Schöpfkolbenpumpe ausgebildet ist, ist der Antrieb 12 so gestaltet, dass er die Antriebsstange veranlasst eine Hubbewegung auszuführen, die auf die Schöpfkolbenpumpe übertragen wird.

Die Schöpfkolbenpumpe weist einen Schöpfkolben auf, wobei sich an dessen unteren Ende ein Schöpfkolbenteller befindet. Um Material 2 aus dem Behälter 1 heraus zu fördern, wird der Schöpfkolben nach unten bewegt, sodass der Schöpfkolbenteller in das Material eintaucht und Material 2 aufnimmt. In der Aufwärtsbewegung des Schöpfkolbens nimmt der Schöpfkolbenteller das Material 2 mit ins Pumpeninnere. Von dort gelangt es über ein erstes Rückschlagventil in eine erste Pumpenkammer. Bei der nächsten Abwärtsbewegung der Antriebsstange und des mit ihr verbundenen Schöpfkolbens gelangt das Material 2 über ein zweites Rückschlagventil in eine zweite Pumpenkammer. Mit der darauffolgenden Aufwärtsbewegung des Schöpfkolbens wird das Material 2 aus der Pumpe 11 heraus in eine Material-Zuführleitung 19 transportiert. Damit wird mit jedem Aufwärtshub des Schöpfkolbens Material 2 in die Material-Zuführleitung 19 transportiert.

Stattdessen kann die Pumpe 11 auch eine Kolbenpumpe ohne Schöpfkolben sein. Der Schöpfkolben hat bei hochviskosen Materialien den Vorteil, dass das Material direkt zum Pumpeneingang 11.1 geschöpft wird. Damit kann das Ansaugverhalten der Pumpe verbessert werden. Wenn die Pumpe 11 hingegen als Zahnradpumpe, Spindelpumpe oder als Exzenter-Schneckenpumpe ausgebildet ist, ist der Antrieb 12 so gestaltet, dass er die Antriebsstange veranlasst eine Rotationsbewegung auszuführen, die auf die Zahnradpumpe, die Spindelpumpe beziehungsweise Exzenter-Schneckenpumpe übertragen wird.

Auslassseitig, also in der Nähe des Auslasses 11.2 der ersten Pumpe 11 kann ein Drucksensor 13 vorhanden sein, um den Druck in der Leitung 19 zu messen. Die erste Pumpe 11, der Pumpenantrieb 12 und der Drucksensor 13 können zu einer Pumpenbaugruppe 10 zusammengefasst sein.

Die Material-Zuführleitung 19 kann als Schlauch ausgebildet und zwischen 3 m und 20 m lang sein. Sie verbindet die erste Pumpenbaugruppe 10 mit einer zweiten Pumpenbaugruppe 20.

Die zweite Pumpenbaugruppe 20 umfasst eine zweite Pumpe 21 und einen Pumpenantrieb 22 zum Antreiben der zweiten Pumpe 21. Diese zweite Pumpe 21 ist vorzugsweise als Zahnradpumpe ausgebildet. Auf der Einlassseite 21.1 der zweiten Pumpe kann ein Drucksensor 23 angeordnet sein, um den auf der Einlassseite 21.1 herrschenden Druck in der Leitung 19 zu erfassen.

Auf der Auslassseite 21.2 der zweiten Pumpe 21 kann ein weiterer Drucksensor 24 angeordnet sein, um den auf der Auslassseite 21.2 herrschenden Druck in der Leitung 29 zu erfassen.

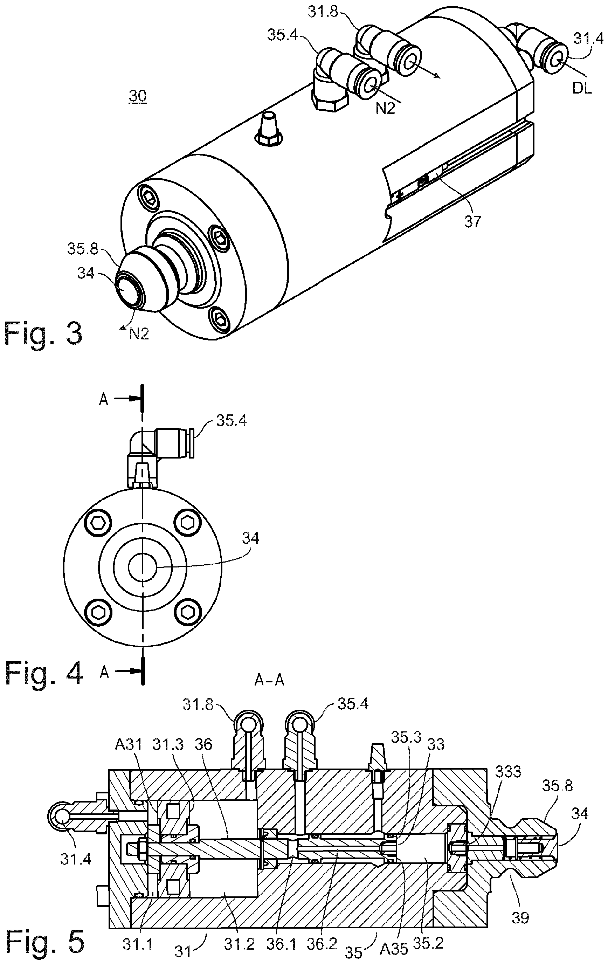

Die Dosier- und Applikationsanlage 100 umfasst zudem eine Gasdosiervorrichtung 30, die wie in den Figuren 3, 4 und 5 gezeigt ist, aufgebaut sein kann. Die Gasdosiervorrichtung 30 ist mit einem ersten Zylinder 31 und einem zweiten Zylinder 35 ausgestattet, wobei der erste Zylinder 31 und der zweite Zylinder 35 einen Hubtransformator mit einem definierten Druck-Übersetzungsverhältnis bilden. Dazu befinden sich im ersten Zylinder 31 eine erste Kammer 31.2 und ein Druckkolben 31.3 und im zweiten Zylinder 35 eine zweite Kammer 35.2 und ein Kolben 35.3. Die beiden Druckkolben 31.3 und 35.3 sind über eine Kolbenstange 36 miteinander gekoppelt. Der Druckkolben 31.3, der Kolben 35.3 und die Kolbenstange 36 können auch als einstückiges Bauteil gefertigt sein.

Die Gasdosiervorrichtung 30 ist so aufgebaut und betreibbar, dass der Druckkolben 31.3 in der ersten Kammer 31.2 einen definierten Hub ausführt. Dadurch wird mit dem Kolben 35.3 in der zweiten Kammer 35.2 das darin befindliche Gas auf ein definierten Druck P39 gebracht. Das in die zweite Kammer 35.2 eingeleitete Gas kann zum Beispiel Luft oder Stickstoff sein und stammt von einer entsprechenden Gasquelle 32. Wie in Figur 5 gezeigt, kann das Gas über einen Gaseinlass 35.4 in die zweite Kammer 35.2 geleitet werden. Die Kolbenstange 36 ist dazu mit einer Querbohrung 36.1 und einem Kanal 36.2 ausgestattet. Somit gelangt das Gas über den Gaseinlass 35.4, die Querbohrung 36.1 und den Kanal 36.2 in die Kammer 35.2. Wird die Kolbenstange 36 aus der in Figur 5 gezeigten linken Endposition nach rechts bewegt, verkleinert sich das Volumen in der Kammer 35.2 entsprechend und das darin befindliche Gas wird komprimiert.

Die Gasdosiervorrichtung 30 weist am Eingang der Kammer 35.2 ein erstes Rückschlagventil 33 auf, das verhindert, dass das in der Kammer 35.2 befindliche Gas von dort zurück zur Gasquelle 32 strömt, wenn der Kolben 35.3 das Gas in der Kammer 35.2 unter Druck setzt.

Die Gasdosiervorrichtung 30 weist an ihrem Ausgang 35.8 zudem ein zweites Rückschlagventil 34 auf. Mit Hilfe des zweiten Rückschlagventils 34 wird verhindert, dass Gas aus der Leitung 39 zurück in die Kammer 35.2 strömt, wenn der Kolben 35.3 sich zurückbewegt, das Volumen der Kammer 35.2 sich also wieder vergrössert. Wenn der Druck P39 gross genug ist, strömt das Gas aus der zweiten Kammer 35.2 durch das Rückschlagventil 34 in die Leitung 39 und von dort zur zweiten Pumpe 21. Da der Druck P39 deutlich höher als der Druck P19 ist, wird das Gas in das am Einlass 21.1 der zweiten Pumpe 21 befindliche Polymermaterial 2 gedrückt. Anschliessend wird das Gas-Polymermaterial-Gemisch mittels eines Mischers 41 homogenisiert.

Die Gasdosiervorrichtung kann vorteilhafterweise ein drittes Rückschlagventil 333 aufweisen, das unmittelbar am Auslass der Kammer 35.2 angeordnet ist. Strömungstechnisch gesehen befindet sich das dritte Rückschlagventil 333 im Gasströmungspfad zwischen dem ersten Rückschlagventil 33 und dem zweiten Rückschlagventil 34. Das zweite Rückschlagventil 34 kann grösser als das dritte Rückschlagventil 333 sein. Das Rückschlagventil 34 verhindert das Eindringen von Polymermaterial in das Rückschlagventil 333. Mit Hilfe des dritten Rückschlagventils 333 kann der Totraum minimiert werden. Als Totraum wird jener Raum im Auslassbereich 35.8 der Gasdosiervorrichtung 30 angesehen, der vom Kolben 35.3 nicht erreichbar ist.

Die mit einer Druckübersetzung arbeitende Gasdosiervorrichtung 30 hat den Vorteil, dass an der Gasquelle 32 ein Gasdruck von einigen wenigen bar, zum Beispiel von 2 bis 3 bar genügt, um das Gas trotzdem in das am Einlass 21.1 der zweiten Pumpe 21 befindliche Polymermaterial 2 zu drücken.

In einer möglichen Ausführungsform beträgt der Druck P19 = 10 bar und der Druck P39 = 60 bar. Das Druckübersetzungsverhältnis $V_P$ bestimmt sich bei diesem Beispiel zu:

$$V_P = P39 \ / \ P31 = A31 \ / \ A35 = 6$$

Wobei gilt:

A31 ist die druckwirksame Fläche des Druckkolbens 31.3 und
A35 ist die druckwirksame Fläche des Kolbens 35.3.

Ausgangsseitig ist die Gasdosiervorrichtung 30 über die Leitung 39 mit dem Einlass 21.1 der zweiten Pumpe 21 verbunden. Es ist von Vorteil, die Leitung 39 kurz zu halten. Je kürzer die Leitung 39 ist, desto kleiner ist der Totraum und umso kürzer ist die Reaktionszeit.

Auf der Einlassseite der Gasdosiervorrichtung 30 kann ein Drucksensor 38 angeordnet sein, um den im Kanal 36.2 herrschenden Gasdruck P32 zu erfassen. Der im Kanal 36.2 herrschende Gasdruck P32 kann herangezogen werden, um die Funktionsfähigkeit des Ventils 33 zu überprüfen. Ist bei offenem Ventil 33 ein Druckabfall im Kanal 36.2 feststellbar, fliesst das Gas von der Gasquelle 32 durch das Ventil 33, das heisst das Ventil 33 fördert Gas in die Kammer 35.2 und arbeitet einwandfrei. Wenn, nachdem das Ventil 33 geöffnet wurde, im Kanal 36.2 kein (zumindest kurzzeitiger) Druckabfall feststellbar ist, kann die Steuerung 90 daraus schliessen, dass kein Gas durch das Ventil 33 in die Kammer 35.2 fliesst. Das Ventil 33 fördert somit kein Gas und es liegt eine Störung vor.

Die zweite Pumpe 21 sorgt dafür, dass das im Polymermaterial 2 gelöste Gas, im Folgenden als Polymermaterial-Gas-Gemisch 5 bezeichnet, einem Mischer 41 zugeführt wird. Dazu ist der Ausgang 21.2 der zweiten Pumpe 21 über eine Leitung 29, die beispielsweise als Schlauch ausgebildet sein kann, mit dem Mischer 41 verbunden. Mit Hilfe des Mischers 41 wird das Polymermaterial-Gas-Gemisch 5 gemischt und damit homogenisiert. Die Leitung 29 kann zwischen 0 m und 5 m lang sein. Beim Wiederanfahren der Anlage nach einem längeren Stillstand ist es von Vorteil die Leitung 29 zu spülen, um das noch darin befindliche Polymermaterial-Gas-Gemisch 5 auszuspülen. Je kürzer die Leitung 29 ist, desto geringer ist der durch das Spülen der Leitung 29 bedingte Materialverlust.

Bei der in Figur 1 gezeigten Dosier- und Applikationsanlage 100 ist der Mischer 41 als dynamischer Mischer ausgebildet. Der dynamische Mischer 41 enthält ein oder mehrere bewegliche Mischerelemente, die über einen Mischerantrieb 42 angetrieben werden und für die Durchmischung des Gases und des Polymermaterials sorgen.

Wenn der Mischer 41 als dynamischer Mischer ausgebildet ist, kann es hilfreich sein, einen Kühler 44 zum Kühlen des Gas-Polymermaterial-Gemisches vorzusehen. Mit Hilfe des Kühlers 44 wird erreicht, dass sich das Gas-Polymermaterial-Gemisch durch die während des Mischvorgangs im Material auftretenden Scherbewegungen nicht zu stark erwärmt. Damit kann eine bestimmte, gewünschte Viskosität des Gas-Polymermaterial-Gemisches eingestellt werden.

Stattdessen kann der Mischer 41 auch als statischer Mischer ausgebildet sein. Andres als beim dynamischen Mischer sind im statischen Mischer keine bewegten Bauteile verbaut, sondern in einem Rohr angeordnete starre, strömungsbeeinflussende Elemente. Diese teilen den Materialstrom auf und führen ihn dann wieder zusammen, wodurch die Vermischung erreicht wird. Beim statischen Mischer erfolgt die Vermischung des Gases und des Polymermaterials allein durch die Strömungsbewegung der beiden Fluide.

Sowohl beim dynamischen als auch beim statischen Mischer steht an dessen Ausgang 41.2 ein homogenes Polymermaterial-Gas-Gemisch 6 zur Verfügung.

Am Einlass 41.1 des Mischers 41 kann ein Drucksensor 43 vorgesehen sein, um den Druck am Mischereinlass 41.1 zu erfassen.

Das vom Mischer 41 erzeugte homogene Polymermaterial-Gas-Gemisch 6 wird über eine Leitung 49 einer dritten Pumpe 51 zugeführt. Die dritte Pumpe 51 fördert das homogene Polymermaterial-Gas-Gemisch 6 über eine Leitung 59 zu einem Dosierventil 61, das im Folgenden auch kurzum als Ventil bezeichnet wird. Dem Dosierventil 61 folgt eine Düse 62, auch Applikationsdüse genannt, mit der das homogene Polymermaterial-Gas-Gemisch 6 appliziert werden kann.

Vorzugsweise sind die beiden Leitung 49 und 59 kurz, damit beim Herunterfahren oder bei einem längeren Stillstand der Anlage 100 nur möglichst wenig des Polymermaterial-Gas-Gemischs 6 zu entsorgen ist.

Die vom Wegsensor 37 und die von den Drucksensoren 13, 23, 24, 38, 43, 53 und 54 ermittelten Messwerte werden einer Steuerung 90 zugeführt, die die Messwerte auswertet und verarbeitet.

Mit Hilfe des Wegsensors 37 kann die Position des Kolbens 31.3 erfasst werden. Aus dessen zeitlicher Position kann die Steuerung 90 ein Zeit/Weg-Diagramm erzeugen. Anhand des Zeit/Weg-Diagramms kann auf die Funktionsfähigkeit der Ventile 333 und 34 geschlossen werden. Wenn die Steuerung 90 feststellt, dass der zeitliche Verlauf des Kolbenhubs nicht dem Sollverlauf entspricht, kann die Steuerung 90 zum Beispiel einen Warnhinweis ausgeben.

Die Steuerung 90 kann beispielsweise so ausgebildet und betreibbar sein, dass mit ihr die Antriebe 12, 22, 42 und 52 gesteuert werden können. Die Steuerung 90 kann zusammen mit der Pumpe 11, dem Antrieb 12 und dem Drucksensor 13 einen Regelkreis bilden. Das Gleiche gilt sinngemäss auch für die Pumpen 21 und 51, die Pumpenantriebe 22 und 52 sowie die Drucksensoren 23, 24, 53 und 54. Dadurch kann beispielsweise die erste Pumpe 11 so geregelt werden, dass sie an ihrem Ausgang 11.2 einen Polymermaterialstrom 2 mit einem konstanten Druck P19 liefert. Mit Hilfe der Steuerung 90 kann auch die zweite Pumpe 21 so geregelt werden, dass sie an ihrem Ausgang 21.2 einen Gas-Polymermaterialstrom 5 mit einem konstanten Druck P29 liefert. Die Steuerung 90 kann auch mit der Gasdosiervorrichtung 30 einen Regelkreis bilden.

Das Dosierventil 61 kann ebenfalls mit Hilfe der Steuerung 90 gesteuert werden. Die Steuerung 90 kann vorgeben, wann und für wie lange das Dosierventil 61 geöffnet ist.

Zudem kann die Steuerung 90 vorgesehen sein, um die Gasdosiervorrichtung 30 zu steuern. Die Steuerung 90 kann dafür sorgen, dass die Gasdosiervorrichtung 30 zu bestimmten Zeitpunkten, zum Beispiel mit einer Frequenz $F_{30}$ von 1 oder 2 Hz, Gas über die Leitung 39 in die Leitung 19 drückt. Die Frequenz $F_{30}$ mit der die Gasdosiervorrichtung 30 Gas in die Leitung 19 drückt, hängt vorzugsweise von der Drehzahl der Pumpe 21 ab. Die Steuerung 90 kann auch ein Steuerventil aufweisen, das mit dem Druckluftanschluss 31.4 des Zylinders 31 verbunden ist, und über das die Kammer 31.2 des Zylinders 31 mit Druckluft beaufschlagt werden kann.

Die Steuerung 90 kann die von den Drucksensoren 13, 23, 24, 38, 43, 53 und 54 stammenden Messwerte auch zu Sicherheitszwecken auswerten. So kann zum Beispiel vorgesehen sein, dass sobald der Messwert des Drucksensors 13 einen bestimmten oberen Sicherheitsschwellwert überschreitet, die Steuerung 90 eingreift und die Anlage 100 abschaltet oder eine Warnmeldung ausgibt. Das Bedienpersonal kann dann situationsbezogen handeln. Auf die sinngemäss gleiche Art kann die Steuerung 90 mit den von den übrigen Drucksensoren 23, 24, 38, 43, 53 und 54 stammenden Messwerten umgehen.

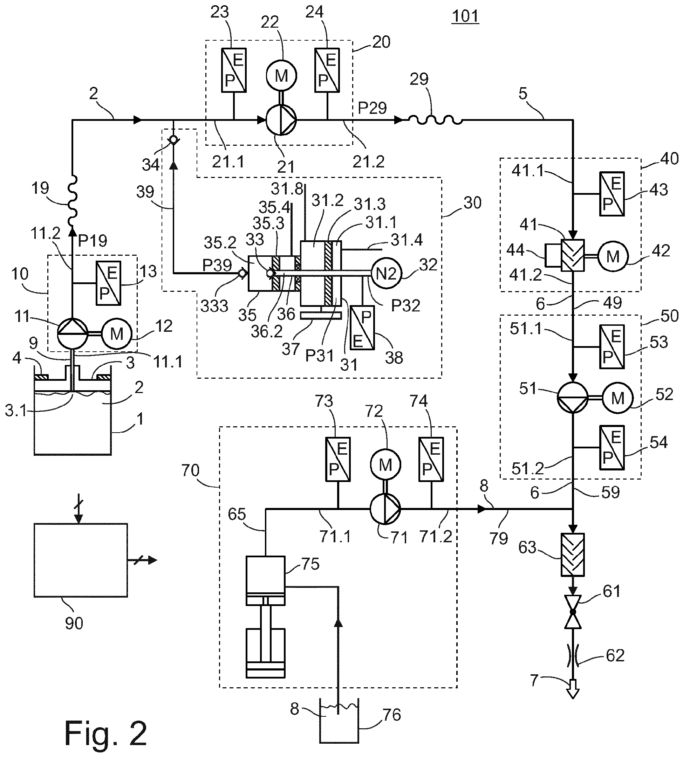

Die in Figur 2 dargestellte zweite Ausführungsform der Dosier- und Applikationsanlage 101 unterscheidet sich von der Dosier- und Applikationsanlage 100 durch eine zusätzlich vorhandene Beschleunigermaterial-Baugruppe 70 und einen zweiten Mischer 63. Die übrigen Komponenten der Dosier- und Applikationsanlage 101 können wie die der Dosier- und Applikationsanlage 100 ausgebildet und angeordnet sein.

Die Beschleunigermaterial-Baugruppe 70 umfasst eine Beschleunigermaterial-Pumpe 75, oder kurz Förderer, zum Fördern von Beschleunigermaterial 8 aus einem Beschleunigermaterial-Vorratsbehälter 76. Die Beschleunigermaterial-Baugruppe 70 umfasst zudem eine vierte Pumpe 71 und einen dazugehörigen Pumpenantrieb 72. Die vierte Pumpe 71 kann beispielsweise als Zahnradpumpe ausgebildet sein kann. Mit Hilfe der vierte Pumpe 71 kann das Beschleunigermaterial 8 in die Leitung 59 eingespeist werden. Von dort gelangt es zusammen mit dem homogenen Gas-Polymermaterial-Gemisch 6 zum zweiten Mischer 63. Dort wird das Beschleunigermaterial 8 mit dem homogenen Gas-Polymermaterial-Gemisch 6 gemischt und zum Dosierventil 61 transportiert. Der Mischer 63 kann als statischer Mischer ausgebildet sein.

Das Beschleunigermaterial 8 ist in der Regel ein Reaktionsbeschleuniger, der unter anderem Wasser enthält. Er bewirkt ein schnelleres Aushärten des Polymermaterials 2.

Am Einlass 71.1 und am Auslass 71.2 der vierten Pumpe 71 kann jeweils ein Drucksensor 73 beziehungsweise 74 vorgesehen sein. Mit dem Drucksensor 73 kann der Druck am Einlass 71.1 und dem Drucksensor 74 der Druck am Auslass 71.2 erfasst werden. Die von den beiden Drucksensoren 73 und 74 stammenden Druckmesswerte können der Steuerung 90 zugeführt und dort verarbeitet werden. Es kann zum Beispiel vorgesehen sein, dass, sobald der Messwert des Drucksensors 73 einen bestimmten oberen Sicherheitsschwellwert überschreitet, die Steuerung 90 eingreift und die Anlage 101 abschaltet oder eine Warnmeldung ausgibt. Sinngemäss das Gleiche gilt für die Überwachung des vom Drucksensor 74 stammenden Messwerts.

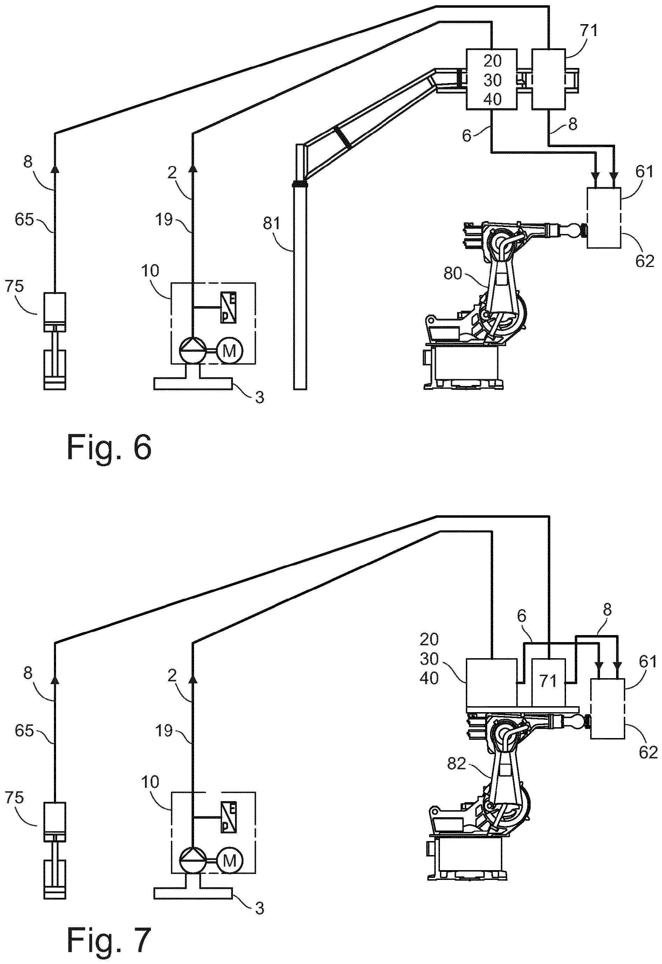

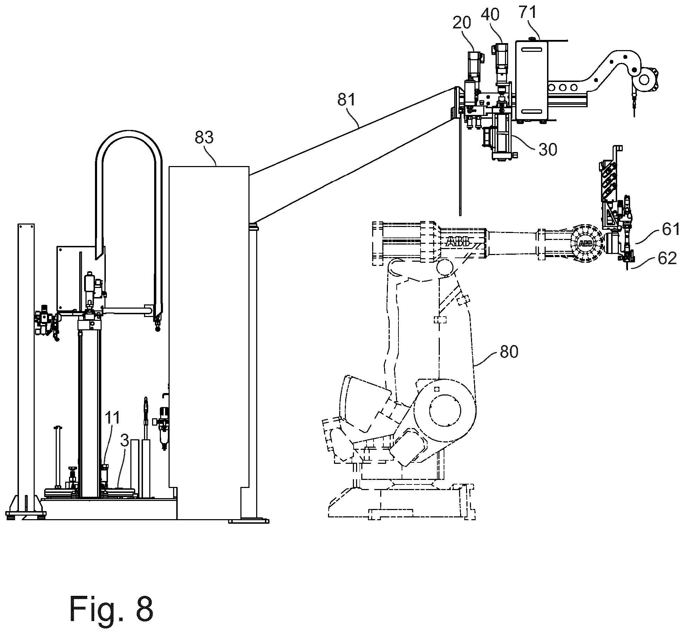

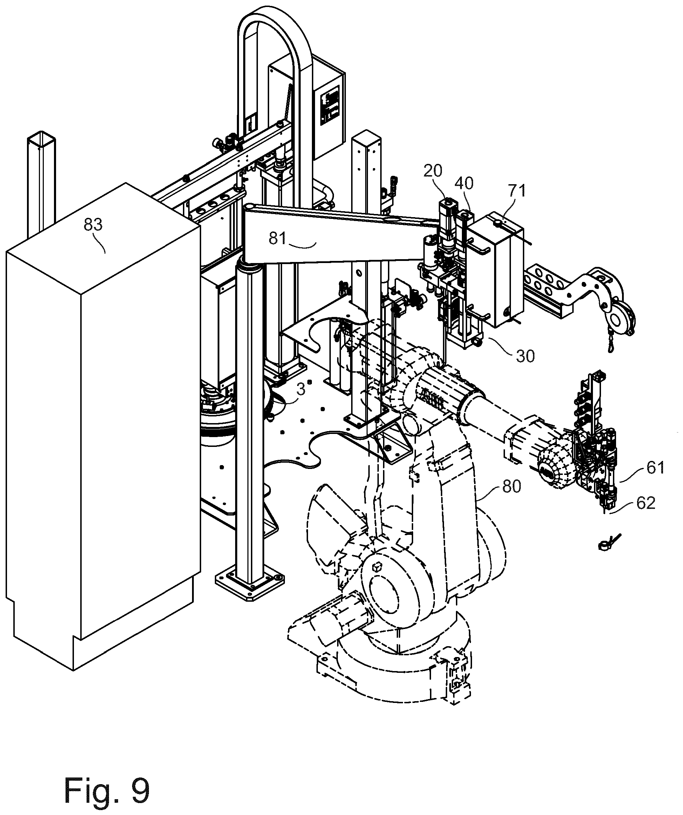

Sowohl die Dosier- und Applikationsanlage 100 als auch die Dosier- und Applikationsanlage 101 können Teil einer automatisierten Dosier- und Applikationsanlage sein. Die Figur 6 zeigt in einer Prinzipdarstellung ein erstes Beispiel für eine solche automatisierte Dosier- und Applikationsanlage. Figur 8 zeigt diese erste Ausführungsform der automatisierten Dosier- und Applikationsanlage in der Seitenansicht. Figur 9 zeigt die Anlage in einer dreidimensionalen Ansicht.

Der Vorratsbehälter 1, die Folgeplatte 3, die erste Pumpenbaugruppe 10 sowie der Förderer 75 für das Beschleunigermaterial 8 und der Beschleunigermaterial-Vorratsbehälter 76 der Dosier- und Applikationsanlage 101 sind stationär am Boden aufgestellt. Die zweite Pumpenbaugruppe 20, die Gasdosiervorrichtung 30 und die Mischerbaugruppe 40 sowie die vierte Pumpe 71 der Dosier- und Applikationsanlage 101 werden von einem Schwenkarm 81 getragen. Lediglich das Dosierventil 61 und die Applikationsdüse 62 sind am Arm eines Roboters 80 befestigt. Auf diese Weise wird die Masse minimiert, die der Roboter 80 manipulieren muss. Aufgrund des geringen Gewichts, das der Roboter 80 zu tragen hat, kann er leistungsmässig klein dimensioniert werden und trotzdem schnell und präzise arbeiten.

Die Steuerung 90 kann in einem Schaltschrank 83 untergebracht sein. Der Schaltschrank 83 kann auch die Steuerung für den Roboter 80 beinhalten.

Ein zweites Beispiel für eine automatisierte Dosier- und Applikationsanlage ist in einer Prinzipdarstellung in Figur 7 dargestellt. Bei dieser Ausführungsform trägt ein Roboter 82 die zweite Pumpenbaugruppe 20, die Gasdosiervorrichtung 30 und die Mischerbaugruppe 40 sowie die vierte Pumpe 71 der Dosier- und Applikationsanlage 101. Das Dosierventil 61 und die Düse 62 sind am Arm eines Roboters 82 befestigt. Der Vorratsbehälter 1, die Folgeplatte 3, die erste Pumpenbaugruppe 10 sowie der Förderer 75 für das Beschleunigermaterial 8 und der Beschleunigermaterial-Vorratsbehälter 76 der Dosier- und Applikationsanlage 101 sind, wie in Figur 6 stationär am Boden aufgestellt. Der in Figur 6 gezeigte Schwenkarm 81 kann hier entfallen, sodass hierfür kein Stellplatz vorgesehen werden muss.

Die vorhergehende Beschreibung der Ausführungsbeispiele gemäss der vorliegenden Erfindung dient nur zu illustrativen Zwecken. Im Rahmen der Erfindung sind verschiedene Änderungen und Modifikationen möglich. So sind beispielsweise die verschiedenen in den Figuren 1 bis 9 gezeigten Komponenten der Dosier- und Applikationsanlage auch auf eine andere als in den Figuren gezeigte Weise miteinander kombinierbar.

Bezugszeichenliste

| 1 | Vorratsbehälter |
| 2 | Polymermaterial |
| 3 | Folgeplatte |
| 3.1 | Förderöffnung in der Folgeplatte |
| 4 | Heizung |
| 5 | Polymermaterial-Gas-Gemisch |
| 6 | Polymermaterial-Gas-Gemisch |
| 7 | Gemisch aus Polymermaterial, Gas und Beschleunigermaterial |
| 8 | Beschleunigermaterial |
| 9 | Leitung |
| 10 | Pumpenbaugruppe |
| 11 | Pumpe |
| 11.1 | Pumpeneinlass |
| 11.2 | Pumpenauslass |
| 12 | Pumpenantrieb |
| 13 | Drucksensor |
| 19 | Schlauch |
| 20 | Pumpenbaugruppe |
| 21 | Pumpe |
| 21.1 | Pumpeneinlass |
| 21.2 | Pumpenauslass |
| 22 | Pumpenantrieb |
| 23 | Drucksensor |
| 24 | Drucksensor |
| 29 | Schlauch |
| 30 | Gasdosiervorrichtung |
| 31 | Zylinder |
| 31.1 | Druckluftkammer |
| 31.2 | Kammer |
| 31.3 | Kolben |
| 31.4 | Druckluftanschluss |
| 31.8 | Entlüftung |
| 32 | Gasquelle/Stickstoffquelle |
| 33 | Rückschlagventil |
| 333 | Rückschlagventil |

| 34 | Rückschlagventil |
|---|---|
| 35 | Zylinder |
| 35.2 | Kammer |
| 35.3 | Kolben |
| 35.4 | Einlass |
| 35.8 | Auslass |
| 36 | Kolbenstange |
| 36.1 | Querbohrung |
| 36.2 | Kanal |
| 37 | Wegsensor |
| 38 | Drucksensor |
| 39 | Leitung |
| 40 | Mischerbaugruppe |
| 41 | Mischer |
| 41.1 | Mischereinlass |
| 41.2 | Mischerauslass |
| 42 | Mischerantrieb |
| 43 | Drucksensor |
| 44 | Kühler |
| 49 | Leitung |
| 50 | Pumpenbaugruppe |
| 51 | Pumpe |
| 51.1 | Pumpeneinlass |
| 51.2 | Pumpenauslass |
| 52 | Pumpenantrieb |
| 53 | Drucksensor |
| 54 | Drucksensor |
| 59 | Leitung |
| 61 | Ventil |
| 62 | Düse |
| 63 | Mischer |
| 65 | Leitung |
| 70 | Pumpenbaugruppe |
| 71 | Pumpe |
| 71.1 | Pumpeneinlass |
| 71.2 | Pumpenauslass |
| 72 | Pumpenantrieb |
| 73 | Drucksensor |
| 74 | Drucksensor |
| 75 | Pumpe für Beschleunigermaterial |
| 76 | Vorratsbehälter mit Beschleunigermaterial |
| 80 | Roboter |
| 81 | Schwenkarm |
| 82 | Roboter |
| 83 | Schaltschrank |
| 90 | Steuerung |
| 100 | Dosier- und Applikationsanlage |
| 101 | Dosier- und Applikationsanlage |
| N2 | Gas/Stickstoff |
| DL | Druckluft |

**Patentansprüche**

1. Dosier- und Applikationsanlage für ein feuchtigkeitshärtendes Polymermaterial,

   - bei der ein Vorratsbehälter (1) für das Polymermaterial (2) vorgesehen ist,
   - bei der eine erste Pumpe (11) und eine zweite Pumpe (21) vorgesehen sind, wobei das Polymermaterial (2) mit der ersten Pumpe (11) vom Vorratsbehälter (1) zur zweiten Pumpe (21) förderbar ist,
- bei der eine Gasdosiervorrichtung (30) mit einem definierten Druckübersetzungsverhältnis vorgesehen ist, um ein Gas auf einen definierten Druck (P39) zu bringen, wobei die Gasdosiervorrichtung (30) ausgangsseitig mit dem Eingang der zweiten Pumpe (21) verbunden ist,
- bei der die Gasdosiervorrichtung (30) eine erste Kammer (31.2) mit einem definierten Volumen und einen Druckkolben (31.3) aufweist, wobei der Druckkolben (31.3) in der ersten Kammer (31.2) einen definierten Hub ausführt, und
- bei der die Gasdosiervorrichtung (30) eine zweite Kammer (35.2) und einen mit dem Druckkolben (31.3) gekoppelten Kolben (35.3) aufweist, sodass das in der zweiten Kammer befindliche Gas unter den definierten Druck (P39) setzbar ist,
- bei der ein Mischer (41) zum Mischen des Polymermaterials (2) und des Gases (N2) vorgesehen ist,
- bei der ein dem Mischer (41) nachgeordnetes Ventil (61) zum Dosieren und eine Düse (62) zum Applizieren des Polymermaterial-Gas-Gemisches (6) vorgesehen sind,

**dadurch gekennzeichnet, dass**

- am Gaseinlass der zweiten Kammer (35.2) ein erstes Rückschlagventil (33) angeordnet ist, und
- am Gasauslass (35.8) der Gasdosiervorrichtung (30) ein zweites Rückschlagventil (34) angeordnet ist.

2. Dosier- und Applikationsanlage nach Patentanspruch 1,
bei der der Mischer als statischer Mischer oder als dynamischer Mischer (41) oder als Kombination aus statischem und dynamischem Mischer ausgebildet ist.

3. Dosier- und Applikationsanlage nach Patentanspruch 1 oder 2,
bei der die Gasdosiervorrichtung (30) einen Wegaufnehmer (37) zur Erfassung des Hubs des Druckkolbens (31.3) aufweist.

4. Dosier- und Applikationsanlage nach Patentanspruch 1, 2 oder 3,
bei der die Gasdosiervorrichtung (30) ein drittes Rückschlagventil (333) aufweist, das im Strömungspfad des Gases zwischen dem ersten Rückschlagventil (33) und dem zweiten Rückschlagventil (34) angeordnet ist.

5. Dosier- und Applikationsanlage nach einem der vorherigen Patentansprüche,
bei der vor der zweiten Pumpe (21) ein erster Drucksensor (23) vorgesehen ist, um den Druck in der Zuleitung (19) zur zweiten Pumpe (21) zu erfassen.

6. Dosier- und Applikationsanlage nach einem der Patentansprüche 1 bis 5,
bei der am Auslass (21.2) der zweiten Pumpe (21) ein zweiter Drucksensor (24) vorgesehen ist, um den Druck am Auslass (21.2) der zweiten Pumpe (21) zu erfassen.

7. Dosier- und Applikationsanlage nach Patentanspruch 1,
bei der die Gasdosiervorrichtung (30) einen Drucksensor (38) aufweist, um den Druck in der zweiten Kammer (35.2) zu erfassen.

8. Dosier- und Applikationsanlage nach einem der vorherigen Patentansprüche,
bei der am Einlass (41.1) des Mischers (41) ein Drucksensor (43) vorgesehen ist, um den Druck am Einlass (41.1) des Mischers (41) zu erfassen.

9. Dosier- und Applikationsanlage nach einem der vorherigen Patentansprüche,
bei der am Auslass (41.2) des Mischers (41) eine dritte Pumpe (51) vorgesehen ist, um die Polymermaterial-Ausstossmenge vorzugeben.

10. Dosier- und Applikationsanlage nach Patentanspruch 9,
bei der am Auslass der dritten Pumpe (51) ein Drucksensor (54) vorgesehen ist, um den Druck an ihrem Auslass (51.2) zu erfassen.

11. Dosier- und Applikationsanlage nach einem der vorherigen Patentansprüche,

- bei der die erste Pumpe (11) derart ausgebildet und betreibbar ist, dass sie den Druck (P19) an ihrem Auslass (11.2) konstant hält, und

- bei der die zweite Pumpe (21) derart ausgebildet und betreibbar ist, dass sie den Druck (P29) an ihrem Auslass (21.2) konstant hält.

**12.** Dosier- und Applikationsanlage nach einem der vorherigen Patentansprüche,

- bei der eine Beschleunigermaterial-Pumpe (75) vorgesehen ist, um Beschleunigermaterial (8) zu einer zusätzlichen Pumpe (71) zu fördern,
- bei der die zusätzliche Pumpe (71) vorgesehen ist, um das Beschleunigermaterial (8) zu einem zweiten Mischer (63) zu pumpen, wobei der zweite Mischer (63) dazu vorgesehen ist, das Gas-Polymermaterial-Gemisch (6) mit dem Beschleunigermaterial (8) zu mischen.

**13.** Dosier- und Applikationsanlage nach einem der vorherigen Patentansprüche,
bei der auf der Einlassseite (71.1) der zusätzlichen Pumpe (71) ein Drucksensor (73) vorgesehen ist.

**14.** Dosier- und Applikationsanlage nach einem der vorherigen Patentansprüche,
bei der am Auslass (71.2) der zusätzlichen Pumpe (71) ein Drucksensor (74) vorgesehen ist, um den Druck an ihrem Auslass (71.2) zu erfassen.

**15.** Dosier- und Applikationsanlage nach einem der vorherigen Patentansprüche,
bei der ein Roboter (80; 82) vorgesehen ist, der die Düse (62) trägt.

**Claims**

**1.** A metering and application system for a moisture-curing polymer material,

- in the case of which a reservoir (1) for the polymer material (2) is provided,
- in the case of which a first pump (11) and a second pump (21) are provided, wherein the polymer material (2) is conveyable with the first pump (11) from the reservoir (1) to the second pump (21),
- in the case of which a gas metering device (30) is provided with a defined pressure transmission ratio to bring a gas to a defined pressure (P39), wherein the gas metering device (30) is connected on the output side to the input of the second pump (21),
- in the case of which the gas metering device (30) has a first chamber (31.2) with a defined volume and a pressure piston (31.3), wherein the pressure piston (31.3) performs a defined stroke in the first chamber (31.2), and
- in the case of which the gas metering device (30) has a second chamber (35.2) and a piston (35.3) coupled to the pressure piston (31.3), so that gas present in the second chamber can be set to the defined pressure (P39),
- in the case of which a mixer (41) is provided for mixing the polymer material (2) and the gas (N2),
- in the case of which a valve (61) arranged downstream from the mixer (41) for metering and a nozzle (62) for applying the polymer material/gas mixture (6) are provided,

**characterized in that**

- a first check valve (33) is arranged at the gas inlet of the second chamber (35.2), and
- a second check valve (34) is arranged at the gas outlet (35.8) of the gas metering device (30).

**2.** The metering and application system according to claim 1,
in the case of which the mixer is embodied as static mixer or as dynamic mixer (41) or as combination of static and dynamic mixer.

**3.** The metering and application system according to claim 1 or 2,
in the case of which the gas metering device (30) has position sensor (37) for detecting the stroke of the pressure piston (31.3).

**4.** The metering and application system according to claim 1, 2, or 3,
in the case of which the gas metering device (30) has a third check valve (333), which is arranged in the flow path of the gas between the first check valve (33) and the second check valve (34).

**5.** The metering and application system according to any one of the preceding claims,
in the case of which a first pressure sensor (23) is provided upstream of the second pump (21) for detecting the pressure in the supply line (19) to the second pump (21).

**6.** The metering and application system according to any one of claims 1 to 5,
in the case of which a second pressure sensor (24) is provided at the outlet (21.2) of the second pump (21) for detecting the pressure at the outlet (21.2) of the second pump (21).

**7.** The metering and application system according to claim 1,
in the case of which the gas metering device (30) has a pressure sensor (38) for detecting the pressure in the second chamber (35.2).

**8.** The metering and application system according to any one of the preceding claims,
in the case of which a pressure sensor (43) is provided at the inlet (41.1) of the mixer (41) for detecting the pressure at the inlet (41.1) of the mixer (41).

**9.** The metering and application system according to any of the preceding claims,
in the case of which a third pump (51) is provided at the outlet (41.2) of the mixer (41) for specifying the polymer material ejection amount.

**10.** The metering and application system according to claim 9,
in the case of which a pressure sensor (54) is provided at the outlet of the third pump (51) for detecting the pressure at its outlet (51.2).

**11.** The metering and application system according to any one of the preceding claims,

- in the case of which the first pump (11) is formed and operable in such a way that it keeps the pressure (P19) at its outlet (11.2) constant, and
- in the case of which the second pump (21) is formed and operable in such a way that it keeps the pressure (P29) at its outlet (21.2) constant.

**12.** The metering and application system according to any one of the preceding claims,

- in the case of which an accelerator material pump (75) is provided for conveying accelerator material (8) to an additional pump (71),
- in the case of which the additional pump (71) is provided for pumping the accelerator material (8) to a second mixer (63), wherein the second mixer (63) is provided for mixing the gas/polymer material mixture (6) with the accelerator material (8).

**13.** The metering and application system according to any one of the preceding claims,
in the case of which a pressure sensor (73) is provided on the inlet side (71.1) of the additional pump (71).

**14.** The metering and application system according to any one of the preceding claims,
in the case of which a pressure sensor (74) is provided at the outlet (71.2) of the additional pump (71) for detecting the pressure at its outlet (71.2).

**15.** The metering and application system according to any one of the preceding claims,
in the case of which a robot (80; 82) is provided, which carries the nozzle (62).

**Revendications**

**1.** Installation de dosage et d'application d'un matériau polymère durcissant à l'humidité,

- dans laquelle est prévu un réservoir (1) pour le matériau polymère (2),
- dans laquelle sont prévues une première pompe (11) et une deuxième pompe (21), le matériau polymère (2) pouvant être transporté par la première pompe (11) du réservoir (1) à la deuxième pompe (21),
- dans laquelle est prévu un dispositif de dosage de gaz (30) avec un rapport de multiplication de pression défini pour amener un gaz à une pression définie (P39), le dispositif de dosage de gaz (30) étant relié côté sortie à l'entrée de la deuxième pompe (21),

- dans laquelle le dispositif de dosage de gaz (30) comporte une première chambre (31.2) avec un volume défini et un piston de pression (31.3), le piston de pression (31.3) effectuant une course définie dans la première chambre (31.2), et

- dans laquelle le dispositif de dosage de gaz (30) comporte une deuxième chambre (35.2) et un piston (35.3) couplé au piston de pression (31.3) pour que le gaz se trouvant dans la deuxième chambre puisse être mis sous la pression définie (P39),

- dans laquelle est prévu un mélangeur (41) pour mélanger le matériau polymère (2) et le gaz (N2),

- dans laquelle sont prévues une vanne (61) disposée en aval du mélangeur (41) pour le dosage et une buse (62) pour l'application du mélange de matériau polymère et de gaz (6),

**caractérisée en ce que**

un premier clapet anti-retour (33) est disposé à l'entrée de gaz de la deuxième chambre (35.2), et un deuxième clapet anti-retour (34) est disposé à la sortie de gaz de la deuxième chambre (35.8) du dispositif de dosage de gaz (30).

2. Installation de dosage et d'application selon la revendication 1,
dans laquelle le mélangeur est conçu comme un mélangeur statique ou comme un mélangeur dynamique (41) ou comme une combinaison d'un mélangeur statique et d'un mélangeur dynamique.

3. Installation de dosage et d'application selon la revendication 1 ou 2,
dans laquelle le dispositif de dosage de gaz (30) comporte un capteur de course (37) pour détecter la course du piston de pression (31.3).

4. Installation de dosage et d'application selon la revendication 1, 2 ou 3,
dans laquelle le dispositif de dosage de gaz (30) comporte un troisième clapet anti-retour (333) qui est disposé entre le premier clapet anti-retour (33) et le deuxième clapet anti-retour (34) dans le trajet d'écoulement du gaz.

5. Installation de dosage et d'application selon l'une des revendications précédentes,
dans laquelle est prévu un premier capteur de pression (23) en amont de la deuxième pompe (21) pour détecter la pression dans la conduite d'alimentation (19) vers la deuxième pompe (21).

6. Installation de dosage et d'application selon l'une des revendications 1 à 5,
dans laquelle est prévu un deuxième capteur de pression (24) à la sortie (21.2) de la deuxième pompe (21) pour détecter la pression à la sortie (21.2) de la deuxième pompe (21).

7. Installation de dosage et d'application selon la revendication 1,
dans laquelle le dispositif de dosage de gaz (30) comporte un capteur de pression (38) pour détecter la pression dans la deuxième chambre (35.2).

8. Installation de dosage et d'application selon l'une des revendications précédentes,
dans laquelle est prévu un capteur de pression (43) à l'entrée (41.1) du mélangeur (41) pour détecter la pression à l'entrée (41.1) du mélangeur (41).

9. Installation de dosage et d'application selon l'une des revendications précédentes,
dans laquelle est prévue une troisième pompe (51) à la sortie (41.2) du mélangeur (41) pour définir la quantité de matériau polymère rejetée.

10. Installation de dosage et d'application selon la revendication 9,
dans laquelle est prévu un capteur de pression (54) à la sortie de la troisième pompe (51) pour détecter la pression à sa sortie (51.2).

11. Installation de dosage et d'application selon l'une des revendications précédentes,

- dans laquelle la première pompe (11) est conçue et peut être actionnée de manière à maintenir constante la pression (P19) à sa sortie (11.2), et

- dans laquelle la deuxième pompe (21) est conçue et peut être actionnée de manière à maintenir constante la pression (P29) à sa sortie (21.2).

**12.** Installation de dosage et d'application selon l'une des revendications précédentes,

- dans laquelle est prévue une pompe de matériau accélérateur (75) pour acheminer le matériau accélérateur (8) vers une pompe supplémentaire (71),
- dans laquelle la pompe supplémentaire (71) est prévue pour pomper le matériau accélérateur (8) vers un deuxième mélangeur (63), le deuxième mélangeur (63) étant prévu pour mélanger le mélange gaz-matériau polymère (6) avec le matériau accélérateur (8).

**13.** Installation de dosage et d'application selon l'une des revendications précédentes, dans laquelle est prévu un capteur de pression (73) côté entrée (71.1) de la pompe supplémentaire (71).

**14.** Installation de dosage et d'application selon l'une des revendications précédentes, dans laquelle est prévu un capteur de pression (74) à la sortie (71.2) de la pompe supplémentaire (71) pour détecter la pression à sa sortie (71.2).

**15.** Installation de dosage et d'application selon l'une des revendications précédentes, dans laquelle est prévu un robot (80; 82) qui porte la buse (62).

Fig. 1

Fig. 2

Fig. 3

Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2017013 B1
- US 2007051832 A1
- WO 2017004635 A1